# EUROPEAN PATENT SPECIFICATION

(11) **EP 4 411 200 B1**
(45) Date of publication and mention of the grant of the patent: **26.03.2025**
(21) Application number: 23154922.1
(22) Date of filing: 03.02.2023
(51) Int. Cl.: F17C 3/00, F17C 6/00, F17C 7/02

(54) **SYSTEM AND METHOD FOR OFFLOADING LCO2 FROM A SHIP TO AN INTERMEDIATE STORAGE AT AN LCO2 RECEIVING TERMINAL**
SYSTEM UND VERFAHREN ZUM ENTLADEN VON LCO2 VON EINEM SCHIFF ZU EINEM ZWISCHENSPEICHER AN EINEM LCO2-EMPFANGSENDGERÄT
SYSTÈME ET PROCÉDÉ DE DÉCHARGEMENT DE LCO2 D'UN NAVIRE VERS UNE MÉMOIRE INTERMÉDIAIRE AU NIVEAU D'UN TERMINAL DE RÉCEPTION LCO2

(43) Date of publication of application: 07.08.2024
(73) Proprietor: Horisont Energi AS, 4313 Sandnes (NO)
(72) Inventor: JOHNSEN, Kim, 4313 SANDNES (NO); FELBAB, Nikola, 4313 SANDNES (NO)
(74) Representative: Brann AB

(56) References cited:
- FR-A1- 3 088 407
- JP-B2- H0 633 873
- NOH HYONJEONG ET AL: "Conceptualization of CO2 Terminal for Offshore CCS Using System Engineering Process", ENERGIES, vol. 12, no. 22, 15 November 2019 (2019-11-15), pages 4350, XP093055447, DOI: 10.3390/en12224350

## Description

### FIELD OF THE INVENTION

The present invention generally relates to CCS technology, and more particularly to a system for offloading liquid CO₂ (LCO₂) from an LCO₂ carrier ship to an intermediate LCO₂ storage tank at an LCO₂ receiving terminal connected to a long term LCO₂ storage facility, wherein cross-contamination from cargo of one ship to another can be avoided. The invention also relates to a corresponding method. The invention uses a slip stream of LCO₂ withdrawn from a stream of LCO₂ being offloaded to the terminal which is vaporised and returned to the LCO₂ carrier ship, and the vaporisation is used to provide sub-cooling of an LCO₂ stream withdrawn from the intermediate LCO₂ storage tank, and a resulting sub-cooled LCO₂ stream is returned to the intermediate LCO₂ storage tank by spraying into the head space of the intermediate LCO₂ storage tank. The present invention also relates to a corresponding method.

### BACKGROUND ART

Captured and liquefied carbon dioxide can be transported in the liquid phase (LCO₂) from various locations and customers to CO₂ receiving terminals at which the CO₂ will be temporarily stored in intermediate buffer storage tanks onshore, before being pumped in a dense phase via a pipeline and injected into an offshore long-term storage reservoir. The purpose of the buffer storage is to allow for continuous injection to the long-term storage reservoir despite intermittent LCO₂ cargo transfer from ship.

A general description of an outline of a CCS chain can be found in Conceptualization of CO2 Terminal for Offshore CCS Using System Engineering Process by Hyonjeong et al. Energies, 2019, 12, 4350. Said CCS chain description includes the return of CO₂ carriers to consider the vaporised CO₂ (VCO₂) in returning carriers. According to Hyonjeong et al., the same volume of VCO₂ must be loaded into the carrier's cargo tank when unloading LCO₂ from the carrier to the CO₂ terminal. The carrier's cargo tank is displaced by the VCO₂ of the storage tanks at the terminal, while LCO₂ fills the storage tanks. There are two reasons for loading VCO₂ into the carrier's cargo tank. The first is to allow the pressure and temperature of the cargo tank to be controlled during the unloading process. Constant pressure and temperature facilitate the process. The second reason is to prevent the rapid decrease in temperature due to Joule-Thomson cooling.

Thus, for example, during LCO₂ cargo transfer between ship and onshore intermediate storage, the displaced vapour in the onshore intermediate storage tank could be returned to the CO₂ carrier ship via a vapour return connection for pressure maintenance in both sets of tanks, i.e. of the carrier ship and of the intermediate storage of the CO₂ receiving terminal, respectively.

However, depending on origin and purity of the LCO₂ being received at the terminal, the vapour in the onshore storage tank or tanks may contain impurities. In the event that restrictions are imposed on the vapour quality of vapour being returned to the ship that are not met by the vapour composition in the onshore storage, such impurities could pose a substantial impediment to the functioning of the CCS chain. In particular, LCO₂ receiving terminals served by multiple customers, with CO₂ originating from various sources, could face challenges from a technical and commercial point with undesired cross-contamination caused by impurities contained in the vapour space, originating from previous off-loaded cargo, of the onshore storage tanks when returned to the ships.

It would be desirable to enable pressure maintenance in both sets of tanks, i.e. of the carrier ship and of the intermediate storage of the CO₂ receiving terminal, while reducing, and preferably avoiding, the risk of contaminating an LCO₂ carrier tank at a ship in connection with offloading LCO₂ from the ship to an LCO₂ receiving terminal.

It is an object of the present invention to provide a system and a method enabling the above.

### SUMMARY OF THE INVENTION

The present invention is based on using a slip stream of LCO₂, which is being withdrawn from a stream LCO₂ being offloaded from a ship and imported to the terminal, for sub-cooling an LCO₂ stream being withdrawn from an intermediate storage tank to which intermediate storage tank a remaining LCO₂ main stream resulting after withdrawal of the slip stream is being led, wherein the two streams are kept separate, and wherein the resulting sub-cooled LCO₂ stream is resprayed into the head space of the storage tank. The obtained cooling for subcooling the LCO₂ stream is accomplished by subjecting the LCO₂ slip stream to a reduced pressure. The resulting cold partly vaporised LCO₂ slip stream, and the LCO₂ stream withdrawn from the storage tank are led to a heat exchanger for exchange of heat. After complete vaporisation of the LCO₂ slip stream, the resulting CO₂ vapour after compression thereof is led back to the ship in a vapour return conduit.

Accordingly, in one aspect the invention relates to a system **250** for offloading LCO₂ cargo from an LCO₂ carrier ship **30** to an intermediate LCO₂ storage tank **40** at an LCO₂ receiving terminal **300,** which system avoids cross-contamination of cargo from one LCO₂ carrier ship **30** to another, said system comprising: an intermediate LCO₂ storage tank **40;** an LCO₂ cargo import conduit **1, 10** connected to the intermediate LCO₂ storage tank **40** configured to receive an LCO₂ cargo import stream from the LCO₂ carrier ship **30;** a CO₂ vapour return conduit **4, 5, 6, 7, 8, 9** configured to be connected to the LCO₂ carrier ship **30** and to return from the system **250** CO₂ vapour to the LCO₂ carrier ship **30;** an LCO₂ main outlet **70** from the intermediate LCO₂ storage tank **40** configured to discharging an injection stream of LCO₂ from the intermediate LCO₂ storage tank **40;** which system additionally comprises an LCO₂ slip stream conduit **2** connected to the LCO₂ cargo import conduit **1** configured to withdrawing a slip stream of LCO₂ from the LCO₂ cargo import conduit **1;** a pressure let-down valve **A** connected to the LCO₂ slip stream conduit **2** configured to receiving the slip stream of LCO₂ having a first temperature **T1,** and to exiting an at least partly vaporised stream of LCO₂ having a second lower temperature **T2;** a partly vaporised stream conduit **3** connected to the pressure let-down valve **A** configured to receiving the at least partly vaporised stream of LCO₂ having a second lower temperature **T2;** a withdrawn LCO₂ stream conduit **16'** connected to the intermediate LCO₂ storage tank **40** configured to discharging a stream of LCO₂ from the intermediate LCO₂ storage tank **40;** a first heat exchanger **B"** connected to the partly vaporised stream conduit **3** and to the withdrawn LCO₂ stream conduit **16',** respectively, said heat exchanger being configured to receiving the at least partly vaporised stream of LCO₂ having the second lower temperature **T2,** to receiving the LCO₂ stream withdrawn from the intermediate LCO₂ storage tank **40,** to transferring heat from the withdrawn LCO₂ stream to the at least partly vaporised stream of LCO₂ having the second lower temperature **T2,** to exiting a cooler withdrawn LCO₂ stream and to exiting an at least partly vaporised stream of LCO₂, respectively; re-spraying means **80** configured to receiving the cooler withdrawn LCO₂ stream and to respraying said sub-cooled withdrawn LCO₂ stream into the head space of intermediate LCO₂ storage tank **40;** wherein the CO₂ vapour return conduit **4, 5, 6, 7, 8, 9** is further configured to receive CO₂ vapour resulting from the at least partly vaporised stream of LCO₂ having the second lower temperature **T2;** and a vapour return compressor **F** arranged along the vapour return conduit **4, 5, 6, 7, 8, 9** configured to compressing the CO₂ vapour to be returned to the LCO₂ carrier ship **30.**

In a preferred embodiment of the system, the system additionally comprises means configured to vaporising a remaining non-vaporised fraction of the at least partly vaporised stream of LCO₂ exiting the first heat exchanger **B".**

In another aspect, the invention relates to a method for offloading LCO₂ cargo from an LCO₂ carrier ship **30** to an intermediate LCO₂ storage tank **40** at an LCO₂ receiving terminal **300,** avoiding cross-contamination of cargo from one LCO₂ carrier ship **30** to another, said method comprising the following steps: i. receiving a cargo import stream of LCO₂ from an LCO₂ carrier ship **30** and directing a main stream of the LCO₂ to an intermediate LCO₂ storage tank **40; ii.** withdrawing LCO₂ from an LCO₂ main outlet **70** from the intermediate LCO₂ storage tank **40; iv.** returning CO₂ vapour from the terminal **300** back to the LCO₂ carrier ship **30,** which method additionally comprises the following steps: **iii'.** withdrawing a stream of LCO₂ from the intermediate LCO₂ storage tank **40; v.** withdrawing from the cargo import stream of LCO₂ a slip stream of LCO₂; **vi.** subjecting the withdrawn slip stream of LCO₂ having a first temperature **T1** to a reduced pressure, thereby partly vaporising the withdrawn LCO₂ slip stream having a first temperature **T1** so as to produce an at least partly vaporised LCO₂ slip stream having a second lower temperature **T2; vii".** subjecting the stream of LCO₂ withdrawn from the intermediate LCO₂ storage tank **40** to heat exchange with the at least partly vaporised LCO₂ slip stream having the second lower temperature **T2,** thereby sub-cooling the stream of LCO₂ withdrawn from the intermediate LCO₂ storage tank **40; viii".** returning the resulting cooled stream of LCO₂ withdrawn from the intermediate LCO₂ storage tank **40** from step **vii"** back to the intermediate LCO₂ storage tank **40** by re-spraying the sub-cooled stream of LCO₂ into the head space of the storage tank **40;** wherein, in step **iv.,** the CO₂ vapour from the terminal **300** being returned to the LCO₂ carrier ship **30** comprises a stream of CO₂ vapour obtained from the slip stream of LCO₂ and is subjected to compression before being returned to the ship.

In a preferred embodiment of the method, the method additionally comprises a step **ix.** wherein a remaining non-vaporised fraction of the at least partly vaporised LCO₂ slip stream after heat exchange in step **vii.** is vaporised.

The present invention provides a method and system providing vapour return for pressure support of LCO₂ carrier ship **30** tanks during liquid off-loading by generating vapours directly from the off-loading cargo at the terminal **300,** eliminating the risk for return of vapour potentially containing incompatible impurities from previous ships existing in the onshore storage tank facility **40.**

Also, the invention provides an energy efficient measure to reduce the pressure in the onshore storage tanks **40,** by heat integration with the ship vapour return **4, 5, 6, 7, 8, 9.**

The present invention provides a method for force-vaporising a portion of the off-loaded LCO₂ cargo, providing vapour for pressure support to the ship tanks without ingress of any potential contaminants from the main onshore storage facility. The system also provides cooling duty for pressure maintenance in the onshore storage tanks, reducing or eliminating the energy requirements and need for a BOG-handling system.

The present invention achieves the advantage of providing CO₂ vapour return to an off-loading LCO₂ carrier ship **30,** independent of the content in the onshore storage tanks, i.e. avoiding exposure of potential contaminants contained in the vapour space from previous off-loaded cargoes, such as from other LCO₂ carrier ships **30.**

Further embodiments and advantages of the invention will be apparent from the following detailed description and appended claims.

In the present disclosure, same reference numeral is used both to denote the conduit and the stream flowing therein. For example, reference numeral **2** is used to both denote the slip stream conduit, and also to denote the slip stream itself flowing in said conduit.

The term "long-term" as used herein denotes a storage intended to be permanent.

The present system and method may be combined with either one or both of the embodiments disclosed applicant's co-pending applications filed on even date herewith, especially, as a compliment, with a method and system handling BOG, such as the system and method of applicant's co-pending application.

### BRIEF DESCRIPTION OF THE ATTACHED DRAWING

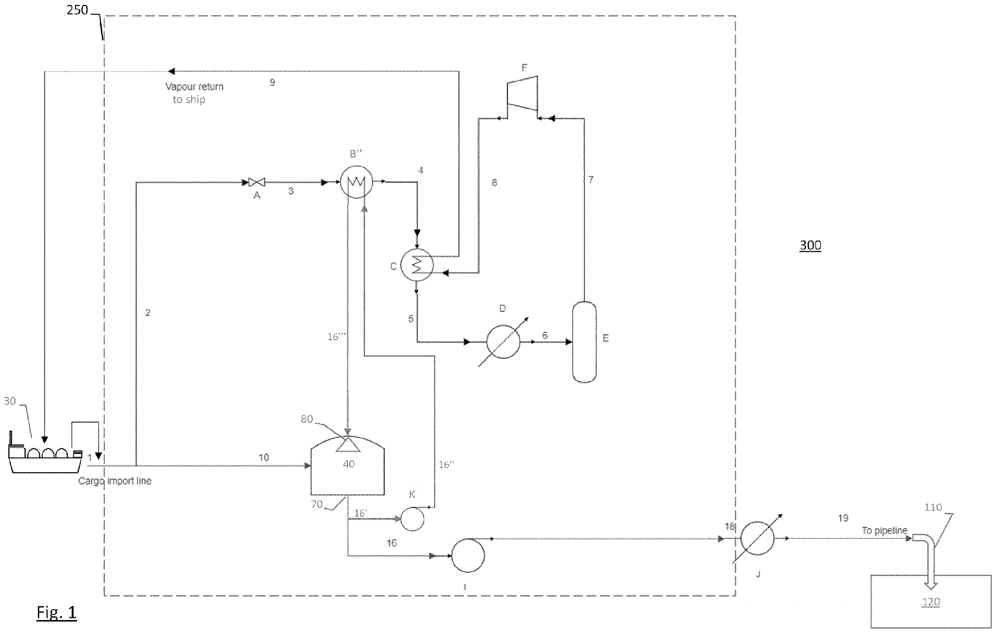

Figure 1 shows an embodiment of the inventive system **250** as indicated by the dashed line implemented into an LCO₂ receiving terminal **300.** The inventive system **250** in its most generic embodiment does not include **C, D, E,** which in a preferred embodiment can be arranged along the vapour return conduit **4, 5, 6, 7, 8, 9,** and does also not include **I,** and **J,** which are units conventionally included in a conventional LCO₂ receiving terminal **300,** in which the inventive system **250** has not been implemented. A withdrawn LCO₂ stream pump **K** will be required if the pressure in conduit **16** at the point for off-take from conduit **16** is not sufficient to respray the LCO2 into the storage tank head space. This will be the case e.g. when the off-take point is upstream of a first pump stage along **16.** Similarly, a withdrawn LCO₂ stream pump **K** will also be required when the withdrawn LCO₂ stream **16'** is withdrawn directly from the storage tank **40** (not shown).

### DETAILED DESCRIPTION OF THE INVENTION

The core of the invention is a process scheme that enables efficient heat integration between the cold closed-circuit vapour return stream to LCO₂ carrier ship **30** and the warmer LCO₂ stream being withdrawn from the onshore storage tanks **40.** This is achieved by using a slip stream of the off-loaded LCO₂ cargo stream, which serves a dual purpose:
- as the CO₂ pressure is let down to e.g. 7 barg, the temperature will drop to approximately -45°C, providing refrigeration for the LCO₂ stream being withdrawn during filling of onshore storage tanks **40.** Respraying of the cooled LCO₂ stream enables a reduced amount of displaced vapour during filling of the storage tank **40;**
- the cold low-pressure LCO₂ is vaporised by indirect heat exchange in the first heat exchanger **B"** which enables a closed-circuit vapour return system, eliminating the risk for return of vapour potentially containing incompatible impurities from previous ships existing in the onshore storage tank facility.

In the above connection, a lower pressure will increase the cooling duty in the first heat exchanger **B",** but will also increase the compressor duty of vapour return compressor **F.**

Without CO₂ vapour return from the LCO₂ receiving terminal **300** to the LCO₂ carrier ship **30,** e.g. in order to avoid cross-contamination of the tanks of the LCO₂ carrier ship **30,** vapour for pressure maintenance on the ship could possibly alternatively be generated by force-vaporising liquid CO₂ cargo on the ship. Such solution is however considered inferior to the solution offered by the invention, since, i.a., with such solution, the displaced vapour in the intermediate LCO₂ storage tank or tanks **40** during filling will increase the sizing and energy requirements for a BOG-handling system of the LCO₂ receiving terminal **300.**

In the embodiment of the invention illustrated in **FIG. 1****,** LCO₂ is offloaded from a ship **30** at pressures from e.g. 15-18 barg (denoted as medium pressure (MP), with a typical saturation temperature between -30°C and -20°C).

A slip stream **2** of the off-loaded cargo stream **1** is fed to a pressure let-down control valve **A,** where the pressure is let down to e.g. 6-10 barg (denoted as low pressure (LP), with a saturation temperature between -50°C and -40°C).

The flow rate of the slip stream **2** will be determined by the off-loading rate, and typically around 5% of the total flow of the cargo stream will be required.

On the downstream side **3** of the pressure let-down valve **A** a two-phase LP LCO₂ stream is fed to the first heat exchanger **B".** In the embodiment in **FIG. 1** the first heat exchanger **B"** is depicted as a shell and tube heat exchanger but could alternatively be of another type, such as a plate or plate-fin heat exchanger. In the first heat exchanger **B",** the cold two-phase LP stream provides cooling of the LCO₂ stream withdrawn from the storage tank **40** during filling thereof. The displacement rate will depend on the filing rate **10,** the injection rate **18,** and the temperature of the cooled stream of LCO₂ being resprayed into the head space of the storage tank **40.**

Ideally, in a case of operation wherein the two-phase LP LCO₂ stream has been fully vaporised after heat exchange in the first heat exchanger **B",** the resulting CO₂ vapour could be returned to the ship after compression of the CO₂ vapour stream **7** in the vapour return compressor **F.**

Following heat exchange in the first heat exchanger **B"** in a case of operation wherein the partly vaporised LP LCO₂ stream **4** has not been fully vaporised, the stream is further vaporised in a second heat exchanger **C,** using the warm discharge stream **8** of CO₂ vapour from the vapour return compressor **F.** In the inventive system, first and second heat exchangers **B"** and **C,** respectively, could be referred to as cross heat exchangers.

In case the heat contents of the withdrawn stream of LCO₂ **16'** and of the compressor discharge stream **8** are not sufficient to completely vaporise the LP LCO2, so that a partly vaporised LCO₂ stream **5** remains after the second heat exchanger **C,** a dedicated vaporiser **D** is provided. The vaporiser **D** could be heated electrically, by ambient sea water or other suitable heat sources available at the terminal **300.**

From the vaporiser **D** the LP CO₂ **6** is preferably fed to a knock-out drum **E** to ensure that any remaining liquid droplets are not found in the suction flow **7** to the vapour return compressor **F.**

The vapour return compressor **F** will increase the pressure to be compatible with the ship cargo tank pressure. The compressor discharge **8** is cooled by cross-heat exchange in heat exchanger **C,** providing heat for vaporisation of a remaining liquid phase in the LP LCO2 stream **4** as described above.

Vapour **9** is returned to ship **30** at pressure and temperature compatible with the MP cargo at a rate that approximately equals the volumetric flow of off-loaded liquid **1.**

As shown in the embodiment of the invention illustrated in **FIG. 1****,** the offloaded LCO₂ is split into two process sections. As described above, the LP LCO2 slip stream **2** is providing vapour for the displaced liquid in the ship cargo tanks **30** in a closed circuit **2, 3, 4, 5, 6, 7, 8, 9.** The major part of the imported LCO₂ is transferred **10** at MP conditions to the intermediate storage tank(s) **40.**

Liquid CO₂ is transferred **16** to injection pump or pumps **I.** In the embodiment of **FIG. 1****,** the injection pump **I** is shown as a single pump but could also be configured in series with booster pumps. The pump(s) provide sufficient head for dense phase CO₂ to be exported to a pipeline **110** and subsequently injected into a reservoir **120** for permanent storage. Downstream of the injection pump **I**, an injection heater **J** may be needed to avoid sub-zero temperatures entering the pipeline **110.** The injection heater J could be heated electrically, by ambient sea water or other suitable heat sources available at the terminal.

The LCO₂ stream **16'** being withdrawn from the storage tank **40** during filling thereof could be withdrawn directly from the tank via a dedicated outlet nozzle (not shown) in the tank, or via the injection stream conduit **16,** and is thereafter forwarded by a pump **K** to heat exchanger **B"** (and further to spraying means **80).** Alternatively, the off-take for withdrawn stream **16'** could be located along the injection stream conduit **16** downstream a pump stage (not shown) with sufficient head to respray the LCO2 into the storage tank head space, in which case a withdrawn LCO₂ stream pump **K** should not be required.

The export flow rate **18** is likely to be lower than cargo transfer rate **10,** hence, as the level in the intermediate storage tank **40** increases vapour will be displaced, or the tank pressure will increase. To control pressure, the displaced vapour will need to be processed or reduced, to avoid CO₂ emission to ambient by vent.

The displaced vapour at MP conditions will be re-liquefied by respraying of the colder LCO₂ stream **16"** into the head space of tank **40.** Ideally, in a case of operation wherein the BOG and/or displaced vapour can be completely re-liquefied in the storage tank by virtue of the colder LCO₂ stream **16"** being resprayed into the tank, an additional BOG-handling system is not required.

A BOG-handling system may be included in the inventive system in order to handle any remaining BOG or displaced vapour not being balanced by the colder partial stream of LCO₂ being sprayed into the storage tank, e.g. using applicant's system for reliquefaction of a fraction of the BOG withdrawn from the storage tank, as disclosed in applicant's co-pending application filed on even date herewith.

### LIST OF REFERENCE SIGNS USED

- 1, 10: LCO₂ cargo import conduit
- 2: LCO₂ slip stream conduit
- 3: partly vaporised LCO₂ stream conduit
- 4, 5, 6, 7, 8, 9: CO₂ vapour return conduit
- 16: conduit connecting bottom outlet 70 with injection pump **I**
- 16': withdrawn LCO₂ stream conduit
- 16": LCO₂ stream conduit to heat exchanger
- 16‴: cooled LCO₂ stream conduit
- 18: conduit connecting outlet from injection pump with injection heater J
- 30: LCO₂ carrier ship
- 40: intermediate LCO₂ storage tank
- 250: system for offloading LCO₂ cargo (from an LCO₂ carrier ship)
- 70: main LCO₂ outlet (from intermediate LCO₂ storage tank)
- 80: re-spraying means
- 300: LCO₂ receiving terminal
- 110: pipeline
- 120: underground long term storage facility
- T1: first temperature (of slip stream)
- T2: second lower temperature (of partly vaporised LCO₂ stream)
- A: pressure let-down valve
- B": first heat exchanger
- C: second heat exchanger
- D: vaporiser
- E: knock-out drum
- F: vapour return compressor
- I: injection pump
- J: injection heater
- K: withdrawn LCO₂ stream pump

## Claims

1. A system (250) for offloading LCO₂ cargo from an LCO₂ carrier ship (30) to an intermediate LCO₂ storage tank (40) at an LCO₂ receiving terminal (300), which system avoids cross-contamination of cargo from one LCO₂ carrier ship (30) to another, said system comprising:
- an intermediate LCO₂ storage tank (40);
- an LCO₂ cargo import conduit (1, 10) connected to the intermediate LCO₂ storage tank (40) configured to receive an LCO₂ cargo import stream from the LCO₂ carrier ship (30);
- a CO₂ vapour return conduit (4, 5, 6, 7, 8, 9) configured to be connected to the LCO₂ carrier ship (30) and to return from the system (250) CO₂ vapour to the LCO₂ carrier ship (30);
- an LCO₂ main outlet (70) from the intermediate LCO₂ storage tank (40) configured to discharging LCO₂ from the intermediate LCO₂ storage tank (40);
**characterized in** additionally comprising,
- an LCO₂ slip stream conduit (2) connected to the LCO₂ cargo import conduit (1) configured to withdrawing a slip stream of LCO₂ from the LCO₂ cargo import conduit (1);
- a pressure let-down valve (A) connected to the LCO₂ slip stream conduit (2) configured to receiving the slip stream of LCO₂ having a first temperature (T1), and to exiting an at least partly vaporised stream of LCO₂ having a second lower temperature (T2);
- a partly vaporised stream conduit (3) connected to the pressure let-down valve (A) configured to receiving the at least partly vaporised stream of LCO₂ having a second lower temperature (T2);
- a withdrawn LCO₂ stream conduit (16') connected to the intermediate LCO₂ storage tank (40) configured to discharging a stream of LCO₂ from the intermediate LCO₂ storage tank (40);
- a first heat exchanger (B") connected to the partly vaporised stream conduit (3) and to the withdrawn LCO₂ stream conduit (16'), respectively, said heat exchanger being configured to receiving the at least partly vaporised stream of LCO₂ having the second lower temperature (T2), to receiving the LCO₂ stream withdrawn from the intermediate LCO₂ storage tank (40), to transferring heat from the LCO₂ stream to the at least partly vaporised stream of LCO₂ having the second lower temperature (T2), to exiting a cooler withdrawn LCO₂ stream and to exiting an at least partly vaporised stream of LCO₂, respectively;
- re-spraying means (80) configured to receiving the cooler withdrawn LCO₂ stream and to respraying said cooler withdrawn LCO₂ stream into the head space of intermediate LCO₂ storage tank (40);
- wherein the CO₂ vapour return conduit (4, 5, 6, 7, 8, 9) is further configured to receiving CO₂ vapour resulting from the at least partly vaporised stream of LCO₂ having the second lower temperature (T2); and
- a vapour return compressor (F) arranged along the vapour return conduit (4, 5, 6, 7, 8, 9) configured to compressing the CO₂ vapour to be returned to the LCO₂ carrier ship (30).

2. The system (50) of claim 1, additionally comprising
- means (C, D, E) arranged along the CO₂ vapour return conduit (4, 5, 6, 7, 8, 9) configured to vaporising a remaining non-vaporised fraction of the at least partly vaporised stream of LCO₂ exiting the first heat exchanger (B").

3. A method for offloading LCO₂ cargo from an LCO₂ carrier ship (30) to an intermediate LCO₂ storage tank (40) at an LCO₂ receiving terminal (300), avoiding cross-contamination of cargo from one LCO₂ carrier ship (30) to another, said method comprising the following steps:
i.) receiving a cargo import stream of LCO₂ from an LCO₂ carrier ship (30) and directing a main stream of the cargo import stream of LCO₂ to an intermediate LCO₂ storage tank (40);
ii.) withdrawing an LCO₂ injection stream from an LCO₂ main outlet (70) from the intermediate LCO₂ storage tank (40);
iv.) returning CO₂ vapour from the terminal (300) back to the LCO₂ carrier ship (30),
**characterized in** additionally comprising the following steps:
iii'.) withdrawing a stream of LCO₂ from the intermediate LCO₂ storage tank (40);
v.) withdrawing from the cargo import stream of LCO₂ a slip stream of LCO₂;
vi.) subjecting the withdrawn slip stream of LCO₂ having a first temperature (T1) to a reduced pressure, thereby partly vaporising the withdrawn LCO₂ slip stream having a first temperature (T1) so as to produce an at least partly vaporised LCO₂ slip stream having a second lower temperature (T2);
vii".) subjecting the stream of LCO₂ withdrawn from the intermediate LCO₂ storage tank (40) to heat exchange with the at least partly vaporised LCO₂ slip stream having the second lower temperature (T2), thereby sub-cooling the stream of LCO₂ withdrawn from the intermediate LCO₂ storage tank (40);
viii".) returning the resulting sub-cooled stream of LCO₂ withdrawn from the intermediate LCO₂ storage tank (40) from step vii" back to the intermediate LCO₂ storage tank (40) by re-spraying the sub-cooled stream of LCO₂ into the head space of the storage tank (40);
wherein, in step (iv.), the CO₂ vapour from the terminal (300) being returned to the LCO₂ carrier ship (30) comprises a stream of CO₂ vapour obtained from the slip stream of LCO₂ and is subjected to compression before being returned to the ship.

4. The method for offloading LCO₂ cargo from an LCO₂ carrier ship (30) to an intermediate LCO₂ storage tank (40) at an LCO₂ receiving terminal (100) of claim 3, additionally comprising the following step:
ix.) vaporising a remaining non-vaporised fraction of the at least partly vaporised LCO₂ slip stream after heat exchange in step (vii),
wherein, in step (iv.), the CO₂ vapour from the terminal being returned to the LCO₂ carrier ship (30) comprises the resulting CO₂ vapour from step (ix.).

## Patentansprüche

1. System (250) zum Entladen einer LCO₂-Fracht von einem LCO₂-Tanker (30) in einen LCO₂-Zwischenspeichertank (40) an einem LCO₂-Empfangsterminal (300), wobei das System eine Kreuzkontamination der Fracht von einem LCO₂-Tanker (30) auf ein anderes vermeidet, wobei das System aufweist:
- einen LCO₂-Zwischenspeichertank (40);
- eine LCO₂-Frachtimportleitung (1, 10), die mit dem LCO₂-Zwischenspeichertank (40) verbunden ist und konfiguriert ist, einen LCO₂-Frachtimportstrom vom LCO₂-Tanker (30) aufzunehmen;
- eine CO₂-Dampfrückführleitung (4, 5, 6, 7, 8, 9), die konfiguriert ist, mit dem LCO₂-Tanker (30) verbunden zu werden und CO₂-Dampf aus dem System (250) zum LCO₂-Tanker (30) zurückzuführen;
- einen LCO₂-Hauptauslass (70) aus dem LCO₂-Zwischenspeichertank (40), der konfiguriert ist, LCO₂ aus dem LCO₂-Zwischenspeichertank (40) abzugeben;
**dadurch gekennzeichnet, dass** es zusätzlich aufweist:
- eine LCO₂-Nachstromleitung (2), die mit der LCO₂-Frachtimportleitung (1) verbunden ist und konfiguriert ist, einen LCO₂-Nachstrom aus der LCO₂-Frachtimportleitung (1) zu entnehmen;
- ein Druckabbauventil (A), das mit der LCO₂-Nachstromleitung (2) verbunden ist und konfiguriert ist, den LCO₂-Nachstrom mit einer ersten Temperatur (T1) aufzunehmen und einen zumindest teilweise verdampften LCO₂-Strom mit einer zweiten, niedrigeren Temperatur (T2) austreten zu lassen;
- eine Leitung (3) für einen teilweise verdampften Strom, die mit dem Druckabbauventil (A) verbunden ist und konfiguriert ist, den zumindest teilweise verdampften LCO₂-Strom mit einer zweiten niedrigeren Temperatur (T2) aufzunehmen;
- eine Leitung (16') für einen entnommenen LCO₂-Strom, die mit dem LCO₂-Zwischenspeichertank (40) verbunden ist und konfiguriert ist, einen LCO₂-Strom aus dem LCO₂-Zwischenspeichertank (40) abzugeben;
- einen ersten Wärmetauscher (B"), der mit der Leitung für den teilweise verdampften Strom (3) bzw. mit der Leitung für den entnommenen LCO₂-Strom (16') verbunden ist, wobei der Wärmetauscher konfiguriert ist, den zumindest teilweise verdampften LCO₂-Strom mit der zweiten niedrigeren Temperatur (T2) aufzunehmen, den aus dem LCO₂-Zwischenspeichertank (40) entnommenen LCO₂-Strom aufzunehmen, Wärme von dem LCO₂-Strom auf den zumindest teilweise verdampften LCO₂-Strom mit der zweiten niedrigeren Temperatur (T2) zu übertragen, einen kühleren entnommenen LCO₂-Strom austreten zu lassen und einen zumindest teilweise verdampften LCO₂-Strom austreten zu lassen;
- eine Wiederversprüh-Einrichtung (80), die konfiguriert ist, den kühleren entnommenen LCO₂-Strom aufzunehmen und den kühleren entnommenen LCO₂-Strom wieder in den Kopfraum des LCO₂-Zwischenspeichertanks (40) zu sprühen;
- wobei die CO₂-Dampfrückführleitung (4, 5, 6, 7, 8, 9) ferner konfiguriert ist, CO₂-Dampf aufzunehmen, der aus dem zumindest teilweise verdampften LCO₂-Strom mit der zweiten niedrigeren Temperatur (T2) resultiert; und
- einen Dampfrückführverdichter (F), der entlang der Dampfrückführleitung (4, 5, 6, 7, 8, 9) angeordnet ist und konfiguriert ist, den CO₂-Dampf zu verdichten, der zum LCO₂-Tanker (30) zurückgeführt werden soll.

2. System (50) nach Anspruch 1, das zusätzlich aufweist:
- eine Einrichtung (C, D, E), die entlang der CO₂-Dampf-Rückführleitung (4, 5, 6, 7, 8, 9) angeordnet und konfiguriert ist, einen verbleibenden nicht verdampften Anteil des zumindest teilweise verdampften LCO₂-Stroms, der aus dem ersten Wärmetauscher (B") austritt, zu verdampfen.

3. Verfahren zum Entladen einer LCO₂-Fracht von einem LCO₂-Tanker (30) in einen LCO₂-Zwischenspeichertank (40) an einem LCO₂-Empfangsterminal (300), wobei eine Kreuzkontamination der Fracht von einem LCO₂-Tanker (30) auf ein anderes vermieden wird, wobei das Verfahren die folgenden Schritte aufweist:
i.) Aufnehmen eines Frachtimportstroms von LCO₂ von einem LCO₂-Tanker (30) und Leiten eines Hauptstroms des Frachtimportstroms von LCO₂ zu einem LCO₂-Zwischenspeichertank (40);
ii.) Entnehmen eines LCO₂-Einspritzstroms von einem LCO₂-Hauptauslass (70) aus dem LCO₂-Zwischenspeichertank (40);
iv.) Rückführen von CO₂-Dampf vom Terminal (300) zurück zum LCO₂-Tanker (30),
**dadurch gekennzeichnet, dass** es zusätzlich die folgenden Schritte aufweist:
iii'.) Entnehmen eines LCO₂-Stroms aus dem LCO₂-Zwischenspeichertank (40);
v.) Entnehmen eines LCO₂-Nachstroms aus dem LCO₂-Frachtimportstrom;
vi.) Aussetzen des entnommenen LCO₂-Nachstroms mit einer ersten Temperatur (T1) einem reduzierten Druck, wodurch der entnommene LCO₂-Nachstrom mit einer ersten Temperatur (T1) teilweise verdampft wird, um einen zumindest teilweise verdampften LCO₂-Nachstrom mit einer zweiten niedrigeren Temperatur (T2) zu erzeugen;
vii".) Unterziehen des aus dem LCO₂-Zwischenspeichertank (40) entnommenen LCO₂-Stroms einem Wärmeaustausch mit dem zumindest teilweise verdampften LCO₂-Nachstrom mit der zweiten niedrigeren Temperatur (T2), wodurch der aus dem LCO₂-Zwischenspeichertank (40) entnommene LCO₂-Strom unterkühlt wird;
viii) Rückführen des resultierenden unterkühlten LCO₂-Stroms, der aus dem LCO₂-Zwischenspeichertank (40) aus Schritt vii" entnommen wurde, zurück in den LCO₂-Zwischenspeichertank (40) durch erneutes Versprühen des unterkühlten LCO₂-Stroms in den Kopfraum des Speichertanks (40);
wobei in Schritt (iv.) der CO₂-Dampf von dem Terminal (300), der zu dem LCO₂-Tanker (30) zurückgeführt wird, einen Strom von CO₂-Dampf aufweist, der aus dem Nachstrom von LCO₂ erhalten wird, und einer Verdichtung unterzogen wird, bevor er zu dem Schiff zurückgeführt wird.

4. Verfahren zum Entladen von LCO₂-Fracht von einem LCO₂-Tanker (30) in einen LCO₂-Zwischenspeichertank (40) an einem LCO₂-Empfangsterminal (100) gemäß Anspruch 3, das zusätzlich den folgenden Schritt aufweist:
ix.) Verdampfen eines verbleibenden nicht verdampften Anteils des zumindest teilweise verdampften LCO₂-Nachstroms nach dem Wärmeaustausch in Schritt (vii),
wobei in Schritt (iv.) der CO₂-Dampf von dem Terminal, der zu dem LCO₂-Tanker (30) zurückgeführt wird, den resultierenden CO₂-Dampf aus Schritt (ix.) aufweist.

## Revendications

1. Système (250) destiné à décharger une cargaison de LCO₂ d'un navire de transport de LCO₂ (30) vers un réservoir de stockage de LCO₂ intermédiaire (40) au niveau d'un terminal de réception de LCO₂ (300), lequel système évite une contamination croisée de cargaison d'un navire de transport de LCO₂ (30) à un autre, ledit système comprenant :
- un réservoir de stockage de LCO₂ intermédiaire (40) ;
- un conduit d'importation de cargaison de LCO₂ (1, 10) raccordé au réservoir de stockage de LCO₂ intermédiaire (40) configuré pour recevoir un écoulement d'importation de cargaison de LCO₂ à partir du navire de transport de LCO₂ (30) ;
- un conduit de renvoi de vapeur de CO₂ (4, 5, 6, 7, 8, 9) configuré pour être raccordé au navire de transport de LCO₂ (30) et pour renvoyer, à partir du système (250), de la vapeur de CO₂ vers le navire de transport de LCO₂ (30) ;
- une sortie principale de LCO₂ (70) depuis le réservoir de stockage de LCO₂ intermédiaire (40) configurée pour décharger le LCO₂ du réservoir de stockage de LCO₂ intermédiaire (40) ;
**caractérisé en ce que** ledit système comprend en outre,
- un conduit d'écoulement glissant de LCO₂ (2) raccordé au conduit d'importation de cargaison de LCO₂ (1) configuré pour extraire un écoulement glissant de LCO₂ à partir du conduit d'importation de cargaison de LCO₂ (1) ;
- une vanne de réduction de pression (A) raccordée au conduit d'écoulement glissant de LCO₂ (2) configurée pour recevoir l'écoulement glissant de LCO₂ ayant une première température (T1), et pour délivrer un écoulement au moins partiellement vaporisé de LCO₂ ayant une seconde température plus basse (T2) ;
- un conduit d'écoulement partiellement vaporisé (3) raccordé à la vanne de réduction de pression (A) configuré pour recevoir l'écoulement au moins partiellement vaporisé de LCO₂ ayant une seconde température plus basse (T2) ;
- un conduit d'écoulement de LCO₂ extrait (16') raccordé au réservoir de stockage de LCO₂ intermédiaire (40) configuré pour décharger un écoulement de LCO₂ du réservoir de stockage de LCO₂ intermédiaire (40) ;
- un premier échangeur de chaleur (B'') raccordé respectivement au conduit d'écoulement partiellement vaporisé (3) et au conduit d'écoulement de LCO₂ extrait (16'), ledit échangeur de chaleur étant configuré, respectivement, pour recevoir l'écoulement au moins partiellement vaporisé de LCO₂ ayant la seconde température plus basse (T2), pour recevoir l'écoulement de LCO₂ extrait du réservoir de stockage de LCO₂ intermédiaire (40), pour transférer de la chaleur de l'écoulement de LCO₂ vers l'écoulement au moins partiellement vaporisé de LCO₂ ayant la seconde température plus basse (T2), pour délivrer un écoulement de LCO₂ extrait plus froid et pour délivrer un écoulement partiellement vaporisé de LCO₂ ;
- un moyen de repulvérisation (80) configuré pour recevoir l'écoulement de LCO₂ extrait plus froid et pour repulvériser ledit écoulement de LCO₂ extrait plus froid dans l'espace de tête de réservoir de stockage de LCO₂ intermédiaire (40) ;
- dans lequel le conduit de renvoi de vapeur de CO₂ (4, 5, 6, 7, 8, 9) est en outre configuré pour recevoir de la vapeur de CO₂ issu de l'écoulement au moins partiellement vaporisé de LCO₂ ayant la seconde température plus basse (T2) ; et
- un compresseur de renvoi de vapeur (F) disposé le long du conduit de renvoi de vapeur (4, 5, 6, 7, 8, 9), configuré pour comprimer la vapeur de CO₂ à renvoyer vers le navire de transport de LCO₂ (30).

2. Système (50) selon la revendication 1, comprenant en outre
- un moyen (C, D, E) disposé le long du conduit de renvoi de vapeur de CO₂ (4, 5, 6, 7, 8, 9), configuré pour vaporiser une fraction non vaporisée restante de l'écoulement au moins partiellement vaporisé de LCO₂ sortant du premier échangeur de chaleur (B").

3. Procédé de déchargement d'une cargaison de LCO₂ d'un navire de transport de LCO₂ (30) vers un réservoir de stockage de LCO₂ intermédiaire (40) au niveau d'un terminal de réception de LCO₂ (300), évitant une contamination croisée de cargaison d'un navire de transport de LCO₂ (30) à un autre, ledit procédé comprenant les étapes suivantes consistant à :
i.) recevoir un écoulement d'importation de cargaison de LCO₂ d'un navire de transport de LCO₂ (30) et diriger un écoulement principal de l'écoulement d'importation de cargaison de LCO₂ vers un réservoir de stockage de LCO₂ intermédiaire (40) ;
ii.) extraire un écoulement d'injection de LCO₂ d'une sortie principale de LCO₂ (70) du réservoir de stockage de LCO₂ intermédiaire (40) ;
iv.) renvoyer de la vapeur de CO₂ du terminal (300) en retour vers le navire de transport de LCO₂ (30),
**caractérisé en ce que** le procédé comprend en outre les étapes suivantes consistant à :
iii'.) extraire un écoulement de LCO₂ du réservoir de stockage de LCO₂ intermédiaire (40) ;
v.) extraire, de l'écoulement d'importation de cargaison de LCO₂, un écoulement glissant de LCO₂ ;
vi.) soumettre l'écoulement glissant extrait de LCO₂ ayant une première température (T1) à une pression réduite, vaporisant ainsi partiellement l'écoulement glissant de LCO₂ extrait ayant une première température (T1) de façon à produire un écoulement glissant de LCO₂ au moins partiellement vaporisé ayant une seconde température plus basse (T2) ;
vii".) soumettre l'écoulement de LCO₂ extrait du réservoir de stockage de LCO₂ intermédiaire (40) à un échange de chaleur avec l'écoulement glissant de LCO₂ au moins partiellement vaporisé ayant la seconde température plus basse (T2), sous-refroidissant ainsi l'écoulement de LCO₂ extrait du réservoir de stockage de LCO₂ intermédiaire (40) ;
viii".) renvoyer l'écoulement sous-refroidi obtenu de LCO₂ extrait du réservoir de stockage de LCO₂ intermédiaire (40) à l'étape vii" en retour vers le réservoir de stockage de LCO₂ intermédiaire (40) par une repulvérisation de l'écoulement sous-refroidi de LCO₂ dans l'espace de tête du réservoir de stockage (40) ;
dans lequel, à l'étape (iv.), la vapeur de CO₂ provenant du terminal (300) qui est renvoyée vers le navire de transport de LCO₂ (30) comprend un écoulement de vapeur de CO₂ obtenu à partir de l'écoulement glissant de LCO₂ et est soumise à une compression avant d'être renvoyée vers le navire.

4. Procédé de déchargement d'une cargaison de LCO₂ d'un navire de transport de LCO₂ (30) vers un réservoir de stockage de LCO₂ intermédiaire (40) au niveau d'un terminal de réception de LCO₂ (100) selon la revendication 3, comprenant en outre l'étape suivante consistant à :
ix.) vaporiser une fraction non vaporisée restante de l'écoulement glissant de LCO₂ au moins partiellement vaporisé après l'échange de chaleur de l'étape (vii),
dans lequel, à l'étape (iv.), la vapeur de CO₂ provenant du terminal qui est renvoyée vers le navire de transport de LCO₂ (30) comprend la vapeur de CO₂ obtenue à l'étape (ix.).
